# DEMANDE DE BREVET EUROPEEN

(11) **EP 4 177 780 A1**
(43) Date de publication de la demande: **10.05.2023**
(21) Numéro de dépôt: 21306569.1
(22) Date de dépôt: 09.11.2021
(51) Int. Cl.: G06F 21/75, G06F 21/54

(54) **PROCEDE DE DETECTION D'UNE TENTATIVE D'EXTRACTION LINEAIRE DU CONTENU D'UNE MEMOIRE**

(71) Demandeur: Institut Mines Telecom, 91120 Palaiseau (FR)
(72) Inventeur: Dutertre, Jean-Max, 13290 Aix-en-Provence (FR)
(74) Mandataire: Cabinet Nony

(57) **Abrégé**

Procédé de détection d'une tentative d'extraction linéaire d'un code de programme enregistré dans une mémoire (10) d'un circuit électronique (1), le code comportant des instructions de programme qui, pour être lues par un cœur de microprocesseur (14), sont chargées séquentiellement via un bus d'instructions (11) dans un registre d'instructions (12) pour le stockage des instructions commandé au moins par un signal d'horloge (clk) et un signal de réinitialisation (reset), le chargement de chaque instruction dans le registre d'instructions (12) s'effectuant sur un front du signal d'horloge (clk), le code comprenant des instructions dites « marqueurs de sécurité » insérées parmi les instructions de programme de manière à être lues au cours de l'exécution du programme, le procédé comportant le déclenchement d'une action prédéfinie d'alerte (300), en cas de non-détection d'un marqueur de sécurité, selon une règle de surveillance prédéfinie.

## Description

### Domaine technique

La présente invention concerne un procédé de détection d'une tentative d'extraction linéaire du contenu d'une mémoire d'un microcontrôleur ou d'un processeur ainsi qu'un circuit électronique configuré pour détecter une telle tentative d'extraction.

### Technique antérieure

Le piratage de cartes à puce est devenu un phénomène courant. Depuis le début des années 1990 environ, presque tous les types de processeurs de cartes à puce utilisés dans les systèmes d'accès conditionnel de télévision payante européens, puis américains et asiatiques, ont été rétro-conçus avec succès. Des cartes clones illicites qui décryptent les chaînes de télévision sans revenus pour le diffuseur ont été vendues. L'industrie a dû mettre à jour la technologie des processeurs de sécurité plusieurs fois déjà et le défi est loin d'être relevé. L'article de O. Kömmerling et al. "Design Principles for Tamper-Resistant Smartcard Processors" USENIX Workshop on Smartcard Technology, 1999 présente des exemples de d'attaques de circuits intégrés et certaines techniques de contremesure.

On peut distinguer deux grandes familles d'attaques : invasives et non-invasives.

Dans le cas d'une attaque non-invasive, la carte attaquée n'est pas physiquement endommagée et l'équipement utilisé dans l'attaque peut généralement être déguisé en un lecteur de carte à puce normal.

En ce qui concerne les attaques invasives, ce sont des attaques physiques par sondage consistant à accéder aux interconnexions de la logique d'un circuit intégré avec une sonde (aiguille métallique positionnée au moyen d'un micromanipulateur sur les pistes métalliques).

La sonde peut être reliée à un oscilloscope (via un amplificateur au besoin) afin de permettre la lecture des données internes manipulées par le circuit cible.

La sonde peut également être pilotée par un générateur de signaux et servir à forcer une valeur logique arbitraire sur un nœud interne du circuit cible (par exemple pour forcer un circuit dans un état donné non sécurisé en fixant la valeur d'un signal de contrôle).

Cette technique d'attaque peut être passive (pour une simple écoute : « *eavesdropping* » en anglais) et/ou active et générant une erreur dans le circuit.

On recourt généralement à un canon à ions (« *Focused Ion Beam* » (FIB) en anglais) pour accéder aux interconnexions à sonder. Le canon à ions est un instrument d'analyse de défaillance utilisé en microélectronique pour creuser des trous dans les circuits intégrés, couper des pistes d'interconnexion, et (re)créer des contacts électriques entre pistes.

Le mémoire de thèse de doctorat de Dmitry Nedospasov intitulé « *Security of the IC backside* » décrit des attaques invasives, notamment des techniques linéaires d'extraction de code.

La publication de Johannes Obermaier et Vincent Immler "The past, present, and future of physical security enclosures: From battery-backed monitoring to PUF-based inherent security and beyond" Journal of Hardware and Systems Security, Aug 2018, et celle de Phil Isaacs et al. "Tamper Proof, Tamper Evident Encryption Technology" Pan Pacific Symposium. SMTA, 2013 présentent des exemples de contre-mesures par enceinte protectrice.

Le code de programme d'un circuit sécurisé comporte plusieurs parties stockées dans ses mémoires Flash ou ROM (il peut être exécuté à partir d'une mémoire ROM, Flash ou RAM). Ce code est protégé contre les relectures sous peine de mettre en péril la sécurité de la gamme de circuits sécurisés considérée.

La connaissance du code permet de mettre au point des attaques matérielles et logicielles. Il est impératif pour un fabricant ou un utilisateur de circuit sécurisé de protéger la confidentialité du code, en empêchant son extraction, ou « *dump* » en anglais.

L'extraction linéaire de code consiste pour un attaquant à relire le code d'un circuit dans le bon ordre de la première adresse mémoire à la dernière (sinon le code est inexploitable). La relecture du code d'un circuit est bloquée avant sa commercialisation. D'où le recours par les attaquants aux techniques d'attaques invasives pour réaliser l'extraction linéaire de code.

Il est à noter qu'une extraction linéaire de code peut également permettre d'extraire les clefs secrètes et autres informations confidentielles stockées dans un circuit.

Dans le mémoire de thèse susmentionné, il est mentionné certaines techniques de protection contre l'extraction linéaire de code comme enterrer les signaux pertinents pour la sécurité dans les couches métalliques inférieures du circuit, ajouter des capteurs ou randomiser l'exécution du programme avec une redondance de registres, etc.

### Exposé de l'invention

Il existe un besoin pour perfectionner encore les procédés de détection d'une tentative d'extraction linéaire du contenu d'une mémoire électronique, notamment en termes de simplicité de mise en œuvre et d'efficacité.

### Procédé de détection

L'invention vise à répondre à cet objectif et a pour objet, selon l'un de ses aspects, un procédé de détection d'une tentative d'extraction linéaire d'un code de programme enregistré dans une mémoire d'un circuit électronique, le code comportant des instructions de programme qui, pour être lues par un cœur de microprocesseur, sont chargées séquentiellement via un bus d'instructions dans un registre d'instructions pour le stockage des instructions commandé au moins par un signal d'horloge et un signal de réinitialisation, le chargement de chaque instruction dans le registre d'instructions s'effectuant sur un front du signal d'horloge, le code comprenant des instructions dites « marqueurs de sécurité » insérées parmi les instructions de programme de manière à être lues au cours de l'exécution du programme, le procédé comportant le déclenchement d'une action prédéfinie d'alerte, en cas de non-détection d'un marqueur de sécurité, selon une règle de surveillance prédéfinie. Par « marqueur de sécurité », on entend une instruction particulière insérée dans le code enregistré dans la mémoire en vue de la protéger contre l'extraction linéaire de son contenu. Un marqueur de sécurité a la même structure que les instructions du jeu d'instructions utilisé par le circuit électronique considéré. Le marqueur de sécurité comprend par exemple 32 bits d'information s'il est utilisé dans des circuits utilisant cette taille d'instruction. L'extraction linéaire du code consiste pour un attaquant à lire successivement les instructions du code.

L'extraction linéaire du code peut comporter le sondage du bus d'instructions et l'activation du signal de réinitialisation de sorte que le cœur du microprocesseur ne lise que des instructions nulles.

Grâce à l'invention, il est possible de détecter aisément une telle attaque d'extraction linéaire de code, notamment par la détection de l'absence de marqueur de sécurité.

La règle de surveillance prédéfinie peut être la non-détection d'un marqueur de sécurité pendant une durée prédéfinie et/ou après qu'un nombre prédéfini d'instructions de programme ont été lues.

De préférence, les marqueurs de sécurité sont insérés dans le code avec une périodicité variable. Ceci permet de rendre difficile leur détection et/ou identification par l'attaquant. La périodicité d'insertion des marqueurs de sécurité peut être pseudo-aléatoire.

Les marqueurs de sécurité sont préférentiellement insérés dans le code de façon que l'exécution des instructions de programme situées entre deux marqueurs de sécurité consécutifs correspond à un nombre de cycles d'horloge inférieur à celui entraînant le déclenchement de l'action prédéfinie d'alerte.

Deux marqueurs de sécurité consécutifs sont de préférence disposés de telle sorte que le nombre de cycles d'horloge entraînant le déclenchement de l'action prédéfinie d'alerte est supérieur au nombre maximal de cycles d'horloge nécessaire à l'exécution des instructions de programme situées entre les deux marqueurs de sécurité.

En effet, le nombre de cycles d'horloge nécessaires à l'exécution d'une instruction peut être variable (et ne peut être connu à l'avance pour certaines d'entre elles). Ainsi, le nombre de cycles d'horloge entraînant le déclenchement de l'action prédéfinie d'alerte est préférentiellement envisagé pour un pire cas, en étant supérieur au nombre maximal de cycles d'horloge nécessaire à l'exécution des instructions de programme situées entre deux marqueurs de sécurité consécutifs.

Au moins un marqueur de sécurité est préférentiellement inséré au début et à la fin du code d'une fonction faisant partie du programme.

Au moins un marqueur de sécurité est préférentiellement inséré à l'adresse de destination d'une instruction de branchement.

Au moins un marqueur de sécurité est préférentiellement inséré au début ou à la fin du code d'une boucle faisant partie du programme.

L'insertion de marqueurs de sécurité dans le cas d'une fonction, d'un branchement ou d'une boucle réduit le nombre d'instructions exécutées entre deux marqueurs de sécurité consécutifs et évite de déclencher l'action prédéfinie d'alerte sans raison.

Dans un mode de réalisation, les marqueurs de sécurité sont codés de sorte à avoir un bit particulier de poids correspondant au même poids que celui d'un bit caractéristique d'une instruction de branchement, le bit particulier ayant la même valeur encodée du bit caractéristique, de sorte à déclencher l'action prédéfinie d'alerte en cas d'une attaque par forçage à la valeur binaire complémentaire du bit caractéristique.

En effet, pour certains codages d'instructions (selon les fabricants), les instructions de branchement possèdent une valeur caractéristique sur un bit particulier.

Si l'on considère, par exemple, un jeu d'instructions codées sur 16 bits (le même raisonnement s'applique également pour les instructions sur 32 et 64 bits), on peut raisonner par exemple en considérant que toutes les instructions de branchement ont leur bit d'indice de poids fort (bit 15 dans ce cas) à la valeur 1. Or ce sont les instructions de branchement qui introduisent des discontinuités lors de l'exécution d'un code (empêchant de ce fait une extraction linéaire).

Ainsi, un attaquant peut réaliser une attaque invasive d'extraction de code linéaire en forçant à 0 ce bit caractéristique (bit 15, de poids fort) des instructions, y compris les instructions de branchement lors de l'exécution du code. Du fait de la mise à zéro de ce bit, les instructions de branchement du code ne sont plus interprétées comme des instructions de branchement. Le pointeur d'instruction (destiné à contenir l'adresse mémoire d'une instruction devant être exécutée) s'incrémente alors de façon à lire successivement toutes les instructions du code (tant que le bit caractéristique est forcé à 0). L'attaquant n'a alors pas besoin de forcer le signal de reset du registre d'instructions. Une telle attaque convient a fortiori au cas où le registre d'instructions ne dispose pas de signal de reset.

Si l'encodage au niveau bit d'un marqueur de sécurité est caractérisé par un bit de poids fort à 0, il ne sera pas corrompu par le forçage à 0 du bit de poids fort. Le procédé de détection est alors inefficace contre l'extraction linéaire par forçage d'un bit (permettant de désactiver les instructions de branchement).

Le choix d'un codage adéquat du marqueur de sécurité permet de garantir l'efficacité du procédé de détection contre le forçage d'un bit à un niveau donné entraînant une vulnérabilité.

En reprenant l'exemple précédent, le fait de choisir un codage du bit de poids fort à 1 pour le marqueur de sécurité (même valeur et même bit caractéristique que pour les instructions de branchement) assure que le forçage de ce bit à 0 empêche le marqueur de sécurité d'être reconnu. En l'absence de détection du marqueur de sécurité, l'action prédéfinie d'alerte est ainsi déclenchée.

Les marqueurs de sécurité peuvent être insérés dans le code lors de la phase de compilation de celui-ci, le code étant ensuite chargé en mémoire lors de la programmation du circuit.

Alternativement, les marqueurs de sécurité sont insérés dans le code lors de l'exécution de ce dernier, en particulier lors de la lecture des instructions de programme depuis la mémoire. Dans ce cas de figure, la mémoire contient une logique de contrôle dotée d'un bloc logique insérant périodiquement un marqueur de sécurité parmi les instructions de programme lorsqu'elles sont lues.

Le bloc logique envoie notamment une commande de cycle d'attente au cœur du microprocesseur lors du chargement d'un marqueur de sécurité dans le registre d'instructions pour que le cœur du microprocesseur insère un cycle d'attente dans le flot d'exécution lors de la réception du marqueur de sécurité. Ce mode de fonctionnement permet d'économiser de la place mémoire et permet également une mise en œuvre plus simple du procédé de détection, car le programme n'a pas à être modifié puisqu'aucun marqueur de sécurité n'y est inséré.

De préférence, les marqueurs de sécurité sont différents les uns des autres par leur charge utile (« *payload* » en anglais). Ceci permet de créer de la confusion chez l'attaquant et de rendre plus difficile le contournement du procédé de détection.

Dans un mode de réalisation, les instructions de programme et les marqueurs de sécurité sont stockés sous forme chiffrée dans la mémoire et sont déchiffrés avant leur chargement dans le registre de stockage.

L'action prédéfinie d'alerte peut comporter l'une au moins des actions suivantes : la réinitialisation du circuit électronique, l'effacement de la mémoire, la remise à zéro de l'adresse de lecture en mémoire, la prise par l'adresse de lecture en mémoire de valeurs non consécutives de façon que l'extraction du code devienne non linéaire, et le saut d'une section de code, notamment d'une section sensible à protéger.

Dans un mode de réalisation, le procédé de détection est mis en œuvre en permanence pour protéger la totalité du code de programme, la première instruction de ce dernier étant un marqueur de sécurité. Dans ce cas, la logique de détection d'une attaque est activée en permanence (et par construction ne peut pas être débrayée).

Dans un autre mode de réalisation, le procédé de détection est mis en œuvre d'une manière paramétrable via la configuration d'un fusible, notamment de type programmable une seule fois (« One Time Programmable » en anglais), ou d'une variable en mémoire non volatile, notamment une mémoire de type Flash ou EEPROM, lors de la phase de programmation du circuit, la valeur mémorisée dans le fusible ou dans la mémoire non-volatile étant lue au démarrage du circuit, en particulier à sa mise sous tension ou à son réveil après réinitialisation, ladite valeur permettant d'activer le procédé de détection, et la première instruction du code de programme étant un marqueur de sécurité si le procédé est activé. Dans ce cas de mise en œuvre paramétrable, la valeur mémorisée (dans le fusible ou la mémoire non-volatile) est lue au démarrage du circuit (mise sous tension ou réveil après réinitialisation, encore appelée « reset ») et permet soit d'activer le procédé de détection soit de le garder inactif. Ce choix est définitif pour toute la durée d'utilisation du circuit.

Le procédé de détection peut être mis en œuvre pour protéger au moins une portion du code de programme délimitée par une adresse de début et une adresse de fin, le procédé étant activé dès qu'une instruction de programme dont l'adresse est comprise entre l'adresse de début et l'adresse de fin est lue pour être exécutée, étant désactivé dès qu'une instruction de programme n'appartenant pas à ladite portion de code est lue pour être exécutée. Dans ce cas, le procédé de détection pour ladite au moins portion de code est activé en permanence et n'est pas débrayable, i.e. chaque fois que des instructions appartenant à ladite portion de code sont exécutées, le procédé de détection est activé.

Le procédé de détection s'applique pour tout type de mémoire pouvant contenir un code de programme en vue de son exécution par un cœur de microprocesseur.

La mémoire peut être embarquée dans le même circuit intégré que le cœur de microprocesseur exécutant les instructions, par exemple une mémoire embarquée de type Flash ou RAM, ou une mémoire externe de type DRAM.

### Circuit électronique

L'invention a encore pour objet, selon un autre de ses aspects, un circuit électronique comportant au moins une mémoire, un cœur de microprocesseur, un bus d'instructions, un bus de lecture, un bus d'adresse et un registre d'instructions pour le stockage des instructions commandé au moins par un signal d'horloge et un signal de réinitialisation, la mémoire étant reliée au registre d'instructions par le bus d'instructions, le registre d'instructions étant relié au cœur du microprocesseur par le bus de lecture, le cœur du microprocesseur comportant un pointeur d'instruction destiné à contenir l'adresse mémoire d'une instruction devant être exécutée, le cœur du microprocesseur étant relié à la mémoire par le bus d'adresse, le circuit étant configuré pour détecter une tentative d'extraction linéaire d'un code de programme enregistré dans la mémoire, le code comportant des instructions de programme qui, pour être lues par le cœur de microprocesseur, sont chargées séquentiellement via le bus d'instructions dans le registre d'instructions sur commande du signal d'horloge, le code comprenant des instructions dites « marqueurs de sécurité » insérées parmi les instructions de programme de manière à être lues au cours de l'exécution du programme, le cœur du microprocesseur comportant un circuit de protection contre une tentative d'extraction linéaire apte à déclencher une action prédéfinie d'alerte en cas de non-détection d'un marqueur de sécurité selon une règle de surveillance prédéfinie.

Le circuit de protection comprend préférentiellement un compteur, le compteur étant de préférence décroissant, notamment configuré pour être décrémenté à chaque chargement d'instruction dans le registre d'instructions, le compteur étant notamment configuré pour être périodiquement réinitialisé à une valeur paramétrable, la réinitialisation du compteur étant en particulier régulièrement effectuée par un marqueur de sécurité avant d'atteindre un seuil d'alarme, notamment zéro, le circuit de protection étant préférentiellement configuré pour déclencher l'action prédéfinie d'alerte lorsque le compteur atteint le seuil d'alarme. La mémoire peut être de type Flash, ROM RAM ou DRAM. Dans ce dernier cas, la mémoire est externe, c'est-à-dire non embarquée dans le même circuit intégré que le cœur de microprocesseur exécutant les instructions.

Le circuit peut comprendre un circuit de décryptage situé entre la mémoire et le registre d'instructions pour déchiffrer les instructions de programme et les marqueurs de sécurité avant leur chargement dans ledit registre. Cela s'applique au cas où les instructions de programme et les marqueurs de sécurité sont stockés sous forme chiffrée dans la mémoire. Dans un mode de réalisation, au moins une portion du code de programme délimitée par une adresse de début et une adresse de fin est protégée contre l'extraction linéaire par le circuit de protection, l'adresse de début et l'adresse de fin étant mémorisées à la programmation du circuit dans une mémoire non-volatile protégée contre l'effacement et la modification.

Le circuit de protection comporte de préférence des registres de chargement desdites adresses de début et de fin, dans lesquels lesdites adresses sont chargées lors du démarrage du circuit, le circuit de protection étant notamment configuré pour déterminer si l'instruction dont l'adresse est contenue dans le pointeur d'instruction appartient à ladite au moins une portion de code par la comparaison de cette adresse avec les adresses de début et de fin. Si c'est le cas, le procédé de détection est activé. Le choix des portions de code protégées peut porter, par exemple, sur la phase de démarrage (phase de boot) du circuit et/ou sur les parties du code mettant œuvre des fonctions de sécurité (utilisation d'outils cryptographiques, par exemple).

Dans un mode de réalisation, le circuit comporte un circuit dit « chien de garde » (« *watchdog* » en anglais) servant à redémarrer le circuit en cas de dysfonctionnement du programme, le circuit chien de garde comprenant un compteur de chien de garde incrémenté au front d'une horloge fournie par un oscillateur interne au circuit, le circuit chien de garde étant configuré en mode *reset* de sorte à émettre un signal de remise à zéro du circuit lorsque le compteur de chien de garde atteint une valeur prédéfinie, le compteur de chien de garde étant remis à zéro périodiquement par l'exécution d'une instruction de réinitialisation de ce compteur.

Le circuit peut comporter un fusible matériel permettant une activation permanente du circuit chien de garde, de sorte que lorsque le fusible est grillé lors de la programmation du circuit, le circuit chien de garde s'active en permanence en mode *reset.*

L'invention a également pour objet, selon un autre de ses aspects, l'utilisation du circuit électronique comportant le fusible matériel permettant une activation permanente du circuit chien de garde, le fusible étant grillé et les instructions de réinitialisation du compteur de chien de garde étant utilisées comme marqueurs de sécurité.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] La figure 1 représente de façon schématique un exemple de circuit de l'état de la technique, non protégé contre l'extraction linéaire du code contenu dans la mémoire du circuit ;
[Fig 2] La figure 2 est une vue analogue à la figure 1 représentant schématiquement un exemple d'attaque d'extraction linéaire du code ;
[Fig 3] La figure 3 est une vue similaire à la figure 2 illustrant schématiquement un décryptage des instructions du code ;
[Fig 4] La figure 4 est une vue analogue à la figure 3 représentant schématiquement un premier exemple de circuit selon l'invention ;
[Fig 5] La figure 5 représente schématiquement un deuxième exemple de circuit selon l'invention avec une logique de contrôle modifiée de la mémoire ;
[Fig 6] La figure 6 montre schématiquement un exemple de portion de code protégée selon l'invention ;
[Fig 7] La figure 7 représente schématiquement un appel de fonction au sein d'un code risquant de déclencher une fausse alerte ;
[Fig 8] La figure 8 est analogue à la figure 7 avec ajout de marqueurs de sécurité pour éviter le déclenchement d'une fausse alerte ;
[Fig 9] La figure 9 représente schématiquement un branchement au sein d'un code risquant de déclencher une fausse alerte ;
[Fig 10] La figure 10 est analogue à la figure 9 avec ajout de marqueurs de sécurité pour éviter le déclenchement d'une fausse alerte ;
[Fig 11] La figure 11 représente schématiquement une boucle au sein d'un code risquant de déclencher une fausse alerte ;
[Fig 12] La figure 12 est analogue à la figure 11 avec ajout de marqueurs de sécurité pour éviter le déclenchement d'une fausse alerte ;
[Fig 13] La figure 13 représente schématiquement un troisième exemple de circuit selon l'invention dans lequel le registre d'instructions fait partie du cœur de microprocesseur ;
[Fig 14] La figure 14 illustre schématiquement un quatrième exemple de circuit selon l'invention dans lequel la mémoire est externe ; et
[Fig 15] La figure 15 représente un cinquième exemple de circuit selon l'invention identique à celui de la figure 4 mais sans circuit de décryptage.

### Description détaillée

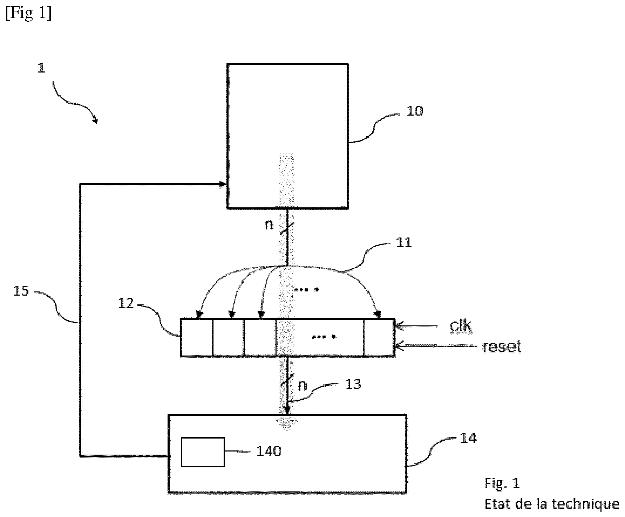

On a illustré schématiquement à la figure 1 un circuit électronique 1 selon l'état de la technique. Le circuit 1 comporte une mémoire 10, un cœur de microprocesseur 14, un bus d'instructions 11, un bus de lecture 13, un bus d'adresse 15 et un registre d'instructions 12 pour le stockage des instructions, commandé par un signal d'horloge *clk* et un signal de réinitialisation *reset* pour une remise à zéro du contenu du registre d'instructions 12.

La mémoire 10 est reliée au registre d'instructions 12 par le bus d'instructions 11.

La mémoire 10 contient un code de programme dont les instructions transitent de la mémoire 10, via le bus d'instructions 11, pour être chargées séquentiellement dans le registre d'instructions 12 sur un front du signal d'horloge *clk,* par exemple sur le front montant de l'horloge.

Le registre d'instructions 12 est relié au cœur du microprocesseur 14 par le bus de lecture 13 via lequel transite l'instruction devant être exécutée vers le cœur du microprocesseur 14. Le cœur du microprocesseur 14 comporte un pointeur d'instruction 140 destiné à contenir l'adresse mémoire de l'instruction devant être exécutée.

Le cœur du microprocesseur 14 est relié à la mémoire 10 par le bus d'adresse 15. Le bus d'adresse contient l'adresse mémoire de l'instruction devant être exécutée à la suite de l'instruction en cours d'exécution.

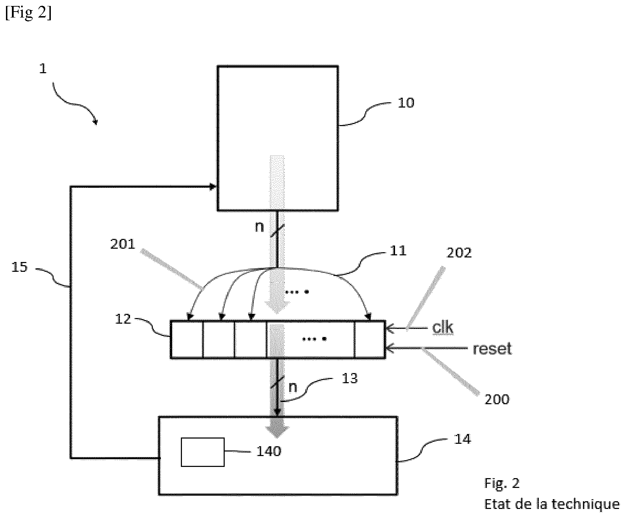

La figure 2 est une vue analogue à la figure 1 représentant schématiquement un exemple d'attaque d'extraction linéaire du code contenu dans la mémoire 10.

Dans une étape liminaire, l'attaquant doit trouver les interconnexions du circuit 1.

Dans une première étape, l'attaquant pose une sonde 200 sur le signal de *reset* pour forcer la remise à zéro du registre d'instructions 12. Ainsi, le cœur du microprocesseur 14 reçoit des instructions nulles : 00000 ... 0 qu'il interprète comme des instructions sans effet (*no operation*, ou *nop*). Le cœur du microprocesseur 14 passe donc à la lecture de l'instruction suivante et ainsi de suite. Par-là, l'attaquant réussit à provoquer une lecture linéaire et progressive du code programme contenu dans la mémoire 10, instruction après instruction. Dans une deuxième étape, l'attaquant trouve les interconnexions du bus d'instructions 11 et y pose une ou plusieurs sondes 201. Ainsi, l'attaquant parvient à lire les instructions du code successivement et bit après bit.

Dans une troisième étape optionnelle, l'attaquant pose une sonde 202 sur la borne de signal d'horloge *clk* pour savoir à quel moment lire les données sur le bus d'instructions 11.

Il s'agit d'un exemple d'attaque extrêmement difficile à contrer dans la mesure où l'attaquant remplace par des instructions nulles (*nops*) dans le registre d'instructions 12 toutes les instructions lues en mémoire, par le forçage de la remise à zéro du registre d'instructions 12. Par ailleurs, les codes des circuits sécurisés sont généralement chiffrés. Cependant, cela ne les protège pas pour autant contre l'extraction linéaire par sondage, car il faut bien que le code soit déchiffré avant son exécution.

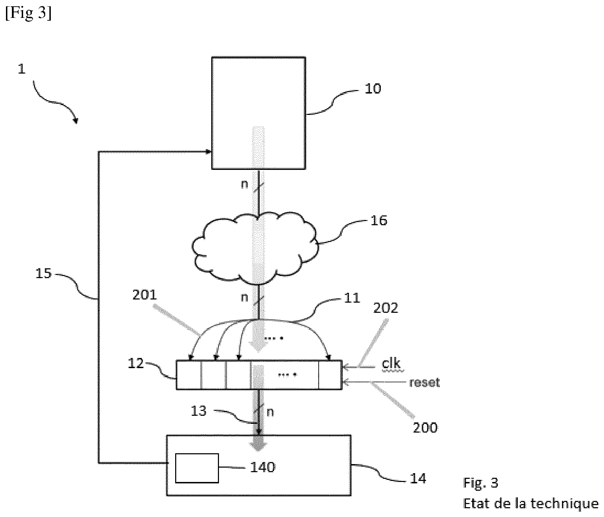

La figure 3 est une vue similaire à la figure 2, illustrant schématiquement un circuit de décryptage 16 des instructions du code. Comme montré sur la figure, les sondes 200, 201, 202 sont placées en aval du circuit de décryptage 16, ce qui permet à l'attaquant de lire les instructions déjà décryptées.

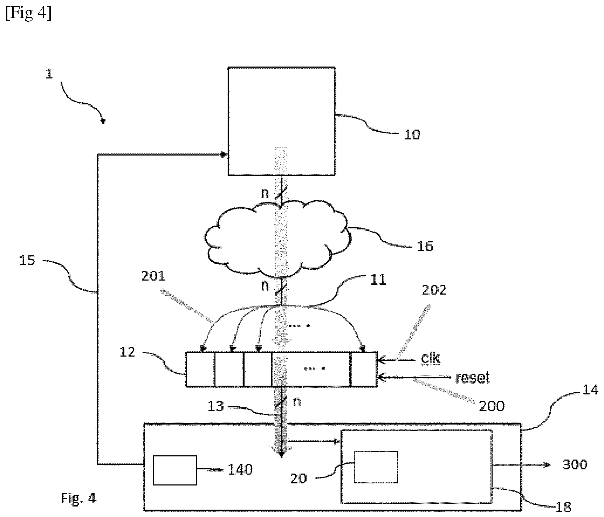

La figure 4 est une vue analogue à la figure 3 représentant schématiquement un premier exemple de circuit 1 selon l'invention.

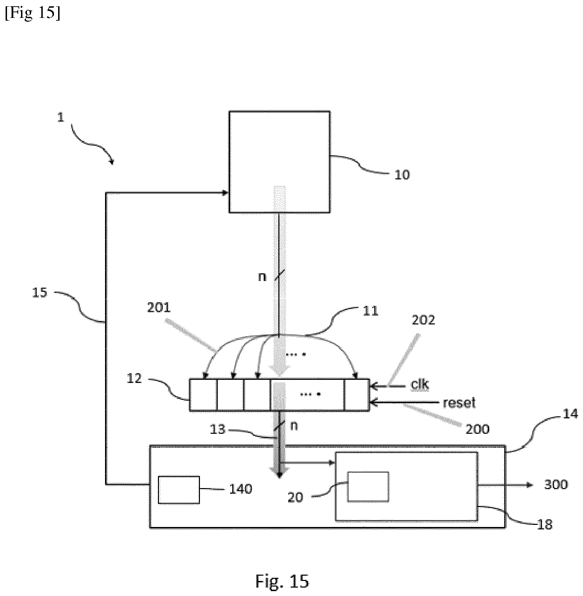

Le circuit 1 possède la même architecture que celle décrite ci-avant, à savoir une mémoire 10, un cœur de microprocesseur 14, un bus d'instructions 11, un bus de lecture 13, un bus d'adresse 15 et un registre d'instructions 12 pour le stockage des instructions commandé par un signal d'horloge *clk* et un signal de réinitialisation *reset* pour une remise à zéro du contenu du registre d'instructions 12. Le circuit de décryptage 16 reste optionnel et il est présent dans le cas où les instructions sont stockées dans la mémoire sous forme chiffrée. La figure 15 illustre le circuit de la figure 4 sans circuit de décryptage 16.

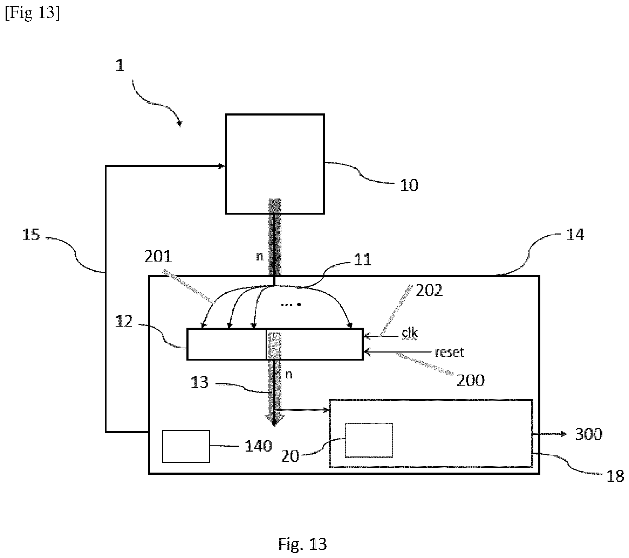

Dans un mode de réalisation représenté à la figure 13, le registre d'instructions 12 fait partie du cœur de microprocesseur 14.

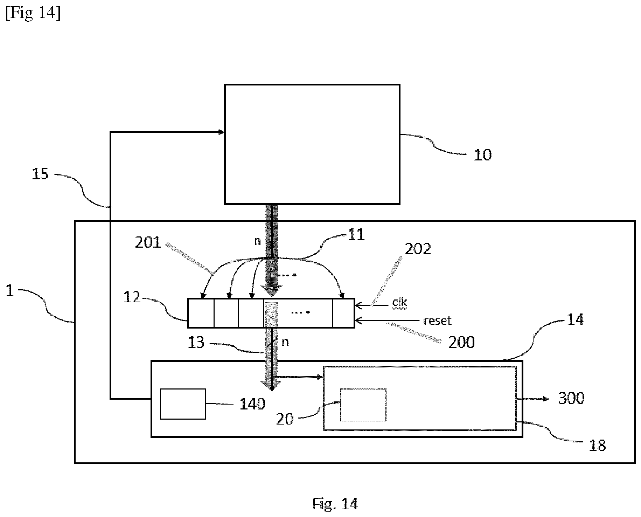

La mémoire 10 est par exemple de type Flash, ROM, RAM ou DRAM. Dans ce dernier cas représenté à la figure 14, la mémoire 10 est externe, c'est-à-dire non embarquée dans le même circuit électronique 1 que le cœur de microprocesseur 14 exécutant les instructions. Le code du programme enregistré dans la mémoire 10 est modifié pour comprendre des instructions de protection dites « marqueurs de sécurité » insérées parmi les instructions de programme de manière à être lues au cours de l'exécution du programme. Par exemple, les marqueurs de sécurité sont insérés dans le code avec une périodicité variable pour rendre difficile leur détection et/ou identification. Afin de tromper un observateur et rendre encore plus compliquée la détection et/ou l'identification des marqueurs de sécurité, il est possible qu'ils soient différents les uns des autres, notamment par leur charge utile.

Le cœur du microprocesseur 14 comporte un circuit de protection 18 contre une tentative d'extraction linéaire, apte à déclencher une action prédéfinie d'alerte 300 en cas de non-détection d'un marqueur de sécurité selon une règle de surveillance prédéfinie.

La règle de surveillance prédéfinie peut être la non-détection d'un marqueur de sécurité pendant une durée prédéfinie et/ou après qu'un nombre prédéfini d'instructions de programme ont été lues.

Le circuit de protection 18 comprend par exemple, comme illustré, un compteur 20 décroissant, configuré pour être décrémenté à chaque chargement d'instruction dans le registre d'instructions 12, et qui est périodiquement réinitialisé à une valeur positive paramétrable.

La réinitialisation du compteur 20 est régulièrement effectuée par un marqueur de sécurité avant d'atteindre zéro. Si le compteur 20 atteint zéro, le circuit de protection 18 est configuré pour déclencher l'action prédéfinie d'alerte 300.

Le compteur 20 peut alternativement être incrémenté à partir de zéro auquel cas, l'action prédéfinie d'alerte 300 est déclenchée lorsque le compteur 20 atteint une valeur prédéfinie (paramétrable en option). La valeur prédéfinie paramétrable peut être une valeur contenue dans la charge utile du marqueur de sécurité précédemment exécuté.

L'action prédéfinie d'alerte 300 peut être : la réinitialisation du circuit 1, l'effacement de la mémoire 10, la remise à zéro de l'adresse de lecture en mémoire (auquel cas l'attaquant lit indéfiniment la même séquence courte d'instruction initiale), l'assignation à l'adresse de lecture en mémoire de valeurs non consécutives incohérentes, notamment par le chargement à chaque cycle d'horloge d'une valeur aléatoire dans le registre d'adresse en mémoire (auquel cas l'extraction de code devient non linéaire), le saut d'une section de code, notamment d'une section sensible à protéger (auquel cas l'attaquant extrait un code inutile), etc.

Les marqueurs de sécurité peuvent être insérés dans le code lors de la phase de compilation de celui-ci, le code étant ensuite chargé en mémoire lors de la programmation du circuit.

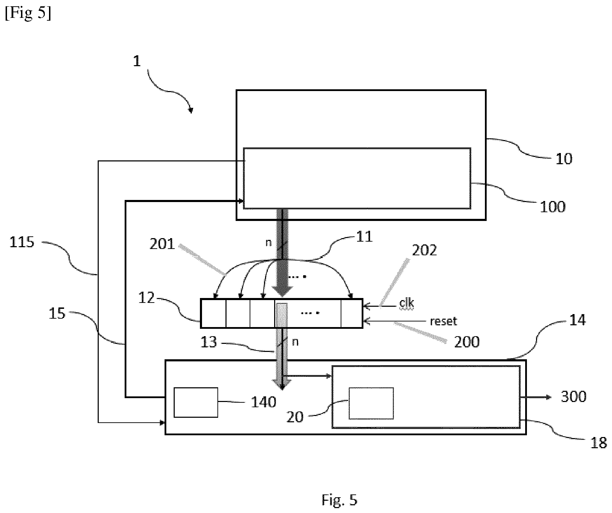

Alternativement, les marqueurs de sécurité sont insérés dans le code lors de l'exécution de ce dernier, en particulier lors de la lecture des instructions de programme depuis la mémoire. Ce mode de réalisation est représenté à la figure 5 où la mémoire 10 contient une logique de contrôle dotée d'un bloc logique 100 insérant périodiquement un marqueur de sécurité parmi les instructions de programme lorsqu'elles sont lues. Dans ce cas, le code stocké dans la mémoire 10 ne comprend pas de marqueur de sécurité et la logique de contrôle de la mémoire est modifiée de sorte à insérer les marqueurs de sécurité à la volée lors de la lecture des instructions de programme depuis la mémoire.

Le bloc logique 100 envoie une commande de cycle d'attente 115 au cœur du microprocesseur 14 lors du chargement d'un marqueur de sécurité dans le registre d'instructions 12 pour que le cœur du microprocesseur 14 insère un cycle d'attente dans le flot d'exécution lors de la réception du marqueur de sécurité. Ainsi, le cœur du microprocesseur 14 est prévenu de la réception d'un marqueur de sécurité plutôt que de l'instruction dont il a fourni l'adresse via le bus d'adresse 15.

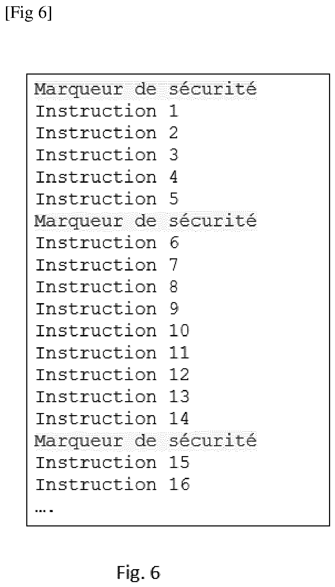

La figure 6 illustre un exemple schématique de portion de code protégé selon l'invention.

Les marqueurs de sécurité sont de préférence insérés dans le code avec une périodicité variable, de façon que l'exécution des instructions de programme situées entre deux marqueurs de sécurité consécutifs correspond à un nombre de cycles d'horloge inférieur à celui entraînant le déclenchement de l'action prédéfinie d'alerte.

Il à noter que le nombre de cycles d'horloge nécessaire à l'exécution d'une instruction peut être variable (et ne peut être connu à l'avance pour certaines d'entre elles). Le nombre de cycles d'horloge entraînant le déclenchement de l'action prédéfinie d'alerte est donc préférentiellement envisagé pour un pire cas, en étant supérieur au nombre maximal de cycles d'horloge nécessaire à l'exécution des instructions de programme situées entre deux marqueurs de sécurité consécutifs.

Comme toute instruction binaire, un marqueur de sécurité comprend essentiellement deux champs : l'*opcode* qui permet d'identifier le marqueur, et la charge utile que l'on peut par exemple faire varier pour tromper un observateur, rendant le contournement de la détection de l'attaque très difficile. Par exemple, il est possible de fixer dans la charge utile la valeur initiale prise par le compteur ou d'imposer une valeur de charge utile suivant une logique particulière (croissante, décroissante, alternée, valeur unique, etc.) afin d'introduire une variabilité permettant de tromper l'attaquant. L'utilité de la charge utile est en effet de pouvoir rendre variable de façon optionnelle le nombre maximal de cycles d'horloge à respecter entre deux marqueurs de sécurité sous peine de déclencher l'action prédéfinie d'alerte.

Par ailleurs, si un code de programme comprend des instructions particulières comme un appel de fonction, un branchement (saut), une boucle, etc., l'insertion des marqueurs de sécurité doit se faire en veillant à ne pas déclencher de fausse alerte.

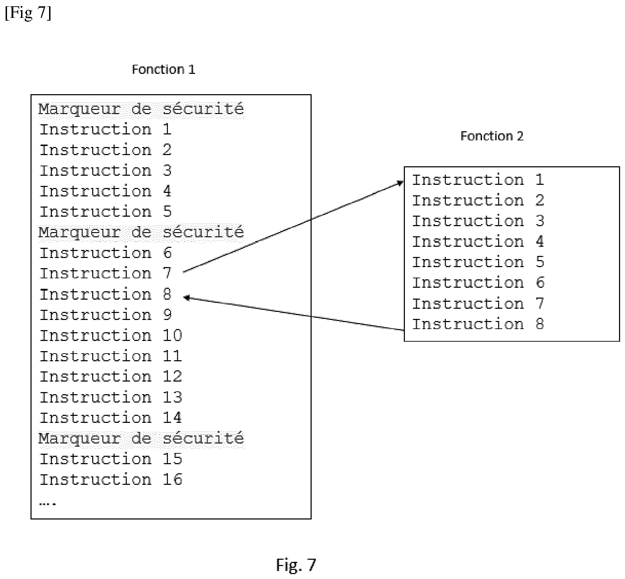

La figure 7 représente schématiquement un appel de fonction au sein d'un code de ce type. La fonction 2 est imbriquée dans le code « Fonction 1 » et est appelée entre les instructions 7 et 8.

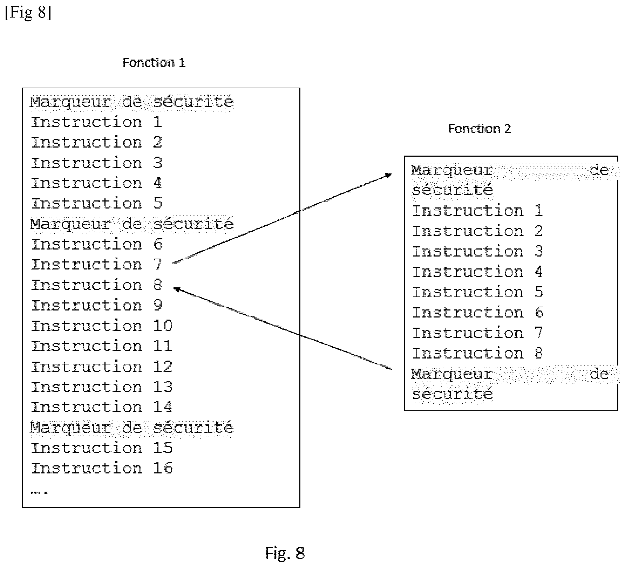

L'exécution de la fonction 2 entraîne l'accroissement du nombre d'instructions exécutées (et donc du nombre de cycles d'horloge écoulés) entre deux marqueurs de sécurité, au risque de déclencher l'action prédéfinie d'alerte 300 sans raison si aucune précaution n'est prise. Une solution à ce problème est illustrée à la figure 8 où deux marqueurs de sécurité sont ajoutés respectivement au début et à la fin du code la fonction 2, réduisant ainsi le nombre de cycles d'horloge séparant deux marqueurs de sécurité en dessous du seuil d'activation de l'action prédéfinie d'alerte 300.

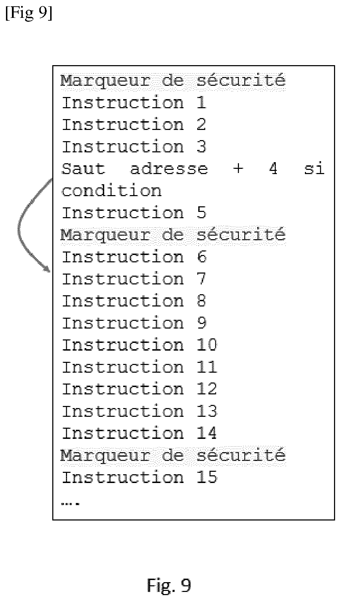

La figure 9 représente schématiquement un branchement au sein d'un code risquant de déclencher une fausse alerte.

Dans l'exemple illustré, le branchement se fait de l'instruction 3 à l'instruction 7, soit un saut de 4 adresses.

A l'exécution, l'instruction de saut prévient l'exécution du marqueur de sécurité placé avant l'instruction 6. Cela entraîne l'accroissement du nombre d'instructions exécutées (et donc du nombre de cycles d'horloge écoulés) entre deux marqueurs de sécurité au risque de déclencher l'action prédéfinie d'alerte 300 sans raison.

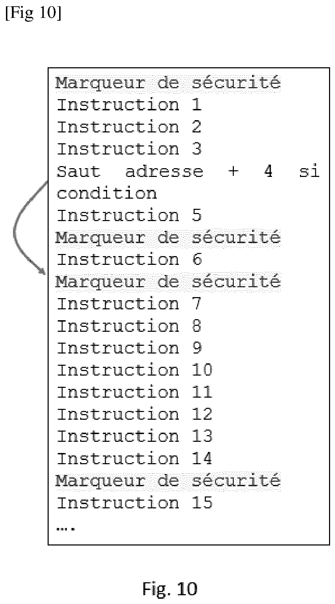

Une solution à ce problème est illustrée à la figure 10 où un marqueur de sécurité est inséré à l'adresse de destination de l'instruction de branchement.

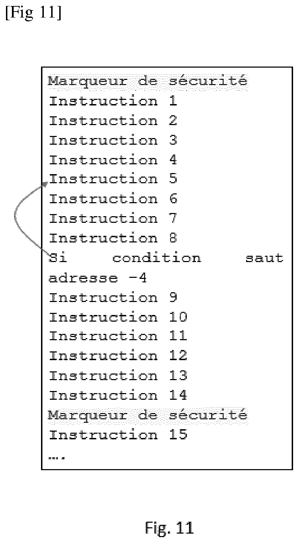

La figure 11 représente schématiquement une boucle au sein d'un code risquant de déclencher une fausse alerte.

Dans l'exemple illustré, la validité d'une condition suivant l'instruction 8 fait reboucler la lecture à l'adresse de l'instruction 5 (ce qui correspond à un saut de 4 adresses en arrière).

En fait, la boucle est exécutée tant que la condition est vérifiée, à chaque fois les instructions 5 à 8 sont exécutées une nouvelle fois entraînant l'accroissement du nombre d'instructions exécutées (et donc du nombre de cycles d'horloge écoulés) entre deux marqueurs de sécurité au risque de déclencher l'action prédéfinie d'alerte 300 sans raison.

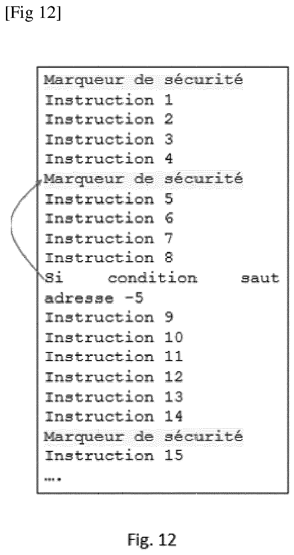

Une solution à ce problème est illustrée à la figure 12 où un marqueur de sécurité est ajouté en tête de la boucle. Le saut vers le début de la boucle correspond dans ce cas à 5 adresses en arrière.

Le marqueur de sécurité peut alternativement être ajouté en fin de la boucle.

Un exemple de domaine d'application de la présente invention est la protection des circuits sécurisés (par exemple cartes à puces, microcontrôleurs sécurisés, etc.) contre l'extraction de leur programme et des données sensibles qu'ils contiennent (clés de cryptographie, droits divers, etc.).

Un exemple de marché touché par l'extraction linéaire de code est celui des cartouches d'encre des imprimantes (extraction linéaire du code des cartouches constructeurs pour en vendre des copies compatibles) qui peuvent donc être protégées par puce sécurisée selon l'invention.

L'invention n'est pas limitée aux exemples de réalisation décrits ci-dessus. Par exemple, il est possible d'implanter le procédé de détection selon l'invention d'une manière purement logicielle en le mettant en œuvre dans les microcontrôleurs, notamment temps réel, dits à chien de garde par l'utilisation du mécanisme intrinsèque de remise à zéro du circuit chien de garde.

## Revendications

1. Procédé de détection d'une tentative d'extraction linéaire d'un code de programme enregistré dans une mémoire (10) d'un circuit électronique (1), le code comportant des instructions de programme qui, pour être lues par un cœur de microprocesseur (14), sont chargées séquentiellement via un bus d'instructions (11) dans un registre d'instructions (12) pour le stockage des instructions commandé au moins par un signal d'horloge (clk) et un signal de réinitialisation (reset), le chargement de chaque instruction dans le registre d'instructions (12) s'effectuant sur un front du signal d'horloge (clk), le code comprenant des instructions dites « marqueurs de sécurité » insérées parmi les instructions de programme de manière à être lues au cours de l'exécution du programme, le procédé comportant le déclenchement d'une action prédéfinie d'alerte (300), en cas de non-détection d'un marqueur de sécurité, selon une règle de surveillance prédéfinie.

2. Procédé selon la revendication précédente, la règle de surveillance prédéfinie étant la non-détection d'un marqueur de sécurité pendant une durée prédéfinie et/ou après qu'un nombre prédéfini d'instructions de programme ont été lues.

3. Procédé selon l'une des deux revendications précédentes, les marqueurs de sécurité étant insérés dans le code avec une périodicité variable et/ou les marqueurs de sécurité étant insérés dans le code de façon que l'exécution des instructions de programme situées entre deux marqueurs de sécurité consécutifs correspond à un nombre de cycles d'horloge inférieur à celui entraînant le déclenchement de l'action prédéfinie d'alerte (300), deux marqueurs de sécurité consécutifs étant de préférence disposés de telle sorte que le nombre de cycles d'horloge entraînant le déclenchement de l'action prédéfinie d'alerte est supérieur au nombre maximal de cycles d'horloge nécessaire à l'exécution des instructions de programme situées entre les deux marqueurs de sécurité.

4. Procédé selon l'une quelconque des revendications précédentes, au moins un marqueur de sécurité étant inséré au début et à la fin du code d'une fonction faisant partie du programme et/ou au moins un marqueur de sécurité étant inséré à l'adresse de destination d'une instruction de branchement et/ou au moins un marqueur de sécurité étant inséré au début ou à la fin du code d'une boucle faisant partie du programme.

5. Procédé selon l'une quelconque des revendications précédentes, les marqueurs de sécurité étant codés de sorte à avoir un bit particulier de poids correspondant au même poids que celui d'un bit caractéristique d'une instruction de branchement, le bit particulier ayant la même valeur encodée du bit caractéristique, de sorte à déclencher l'action prédéfinie d'alerte (300) en cas d'une attaque par forçage à la valeur binaire complémentaire du bit caractéristique.

6. Procédé selon l'une quelconque des revendications précédentes, les marqueurs de sécurité étant insérés dans le code lors de l'exécution de ce dernier, en particulier lors de la lecture des instructions de programme depuis la mémoire (10), la mémoire (10) contenant de préférence une logique de contrôle dotée d'un bloc logique (100) insérant périodiquement un marqueur de sécurité parmi les instructions de programme lorsqu'elles sont lues, le bloc logique (100) transmettant en particulier une commande de cycle d'attente (115) au cœur du microprocesseur (14) lors du chargement d'un marqueur de sécurité dans le registre d'instructions (12) pour que le cœur du microprocesseur (14) insère un cycle d'attente dans le flot d'exécution lors de la réception du marqueur de sécurité.

7. Procédé selon l'une quelconque des revendications précédentes, les marqueurs de sécurité étant différents les uns des autres par leur charge utile et/ou l'action prédéfinie d'alerte (300) comporte l'une au moins des actions suivantes : la réinitialisation du circuit électronique (1), l'effacement de la mémoire (10), la remise à zéro de l'adresse de lecture en mémoire (10), la prise par l'adresse de lecture en mémoire de valeurs non consécutives de façon que l'extraction du code devienne non linéaire, et le saut d'une section de code, notamment d'une section sensible à protéger.

8. Procédé selon l'une quelconque des revendications précédentes, étant mis en œuvre en permanence pour protéger la totalité du code de programme, la première instruction de ce dernier étant un marqueur de sécurité.

9. Procédé selon l'une quelconque des revendications 1 à 8, étant mis en œuvre d'une manière paramétrable via la configuration d'un fusible, notamment de type programmable une seule fois, ou d'une variable en mémoire non volatile, notamment une mémoire de type Flash ou EEPROM, lors de la phase de programmation du circuit, la valeur mémorisée dans le fusible ou dans la mémoire non-volatile étant lue au démarrage du circuit, en particulier à sa mise sous tension ou à son réveil après réinitialisation, ladite valeur permettant d'activer le procédé de détection, et la première instruction du code de programme étant un marqueur de sécurité si le procédé est activé.

10. Procédé selon l'une quelconque des revendications 1 à 8, étant mis en œuvre pour protéger au moins une portion du code de programme délimitée par une adresse de début et une adresse de fin, le procédé étant activé dès qu'une instruction de programme dont l'adresse est comprise entre l'adresse de début et l'adresse de fin est lue pour être exécutée, étant désactivé dès qu'une instruction de programme n'appartenant pas à ladite portion de code est lue pour être exécutée, ladite portion de code correspondant notamment à la phase de démarrage du circuit ou une partie de code mettant en œuvre des fonctions de sécurité, notamment des outils cryptographiques.

11. Circuit électronique (1) comportant au moins une mémoire (10), un cœur de microprocesseur (14), un bus d'instructions (11), un bus de lecture (13), un bus d'adresse (15) et un registre d'instructions (12) pour le stockage des instructions commandé au moins par un signal d'horloge (clk) et un signal de réinitialisation (reset), la mémoire (10) étant reliée au registre d'instructions (12) par le bus d'instructions (11), le registre d'instructions (12) étant relié au cœur du microprocesseur (14) par le bus de lecture (13), le cœur du microprocesseur (14) comportant un pointeur d'instruction (140) destiné à contenir l'adresse mémoire d'une instruction devant être exécutée, le cœur du microprocesseur (14) étant relié à la mémoire (10) par le bus d'adresse (15), le circuit (1) étant configuré pour détecter une tentative d'extraction linéaire d'un code de programme enregistré dans la mémoire (10), le code comportant des instructions de programme qui, pour être lues par le cœur de microprocesseur (14), sont chargées séquentiellement via le bus d'instructions (11) dans le registre d'instructions (12) sur commande du signal d'horloge (clk), le code comprenant des instructions dites « marqueurs de sécurité » insérées parmi les instructions de programme de manière à être lues au cours de l'exécution du programme, le cœur du microprocesseur (14) comportant un circuit de protection (18) contre une tentative d'extraction linéaire apte à déclencher une action prédéfinie d'alerte (300) en cas de non-détection d'un marqueur de sécurité selon une règle de surveillance prédéfinie, le circuit de protection (18) comprenant en particulier un compteur (20), le compteur (20) étant de préférence décroissant, notamment configuré pour être décrémenté à chaque chargement d'instruction dans le registre d'instructions (12), le compteur (20) étant notamment configuré pour être périodiquement réinitialisé à une valeur paramétrable, la réinitialisation du compteur (20) étant en particulier régulièrement effectuée par un marqueur de sécurité avant d'atteindre un seuil d'alarme, notamment zéro, le circuit de protection (18) étant préférentiellement configuré pour déclencher l'action prédéfinie d'alerte (300) lorsque le compteur (20) atteint le seuil d'alarme.

12. Circuit selon la revendication précédente, au moins une portion du code de programme délimitée par une adresse de début et une adresse de fin étant protégée contre l'extraction linéaire par le circuit de protection (18), l'adresse de début et l'adresse de fin étant mémorisées à la programmation du circuit (1) dans une mémoire non-volatile protégée contre l'effacement et la modification, le circuit de protection (18) comportant de préférence des registres de chargement desdites adresses de début et de fin, dans lesquels lesdites adresses sont chargées lors du démarrage du circuit (1), le circuit de protection (18) étant notamment configuré pour déterminer si l'instruction dont l'adresse est contenue dans le pointeur d'instruction (140) appartient à ladite au moins une portion de code par la comparaison de cette adresse avec les adresses de début et de fin.

13. Circuit selon l'une des deux revendications précédentes, comportant un circuit dit « chien de garde » servant à redémarrer le circuit (1) en cas de dysfonctionnement du programme, le circuit chien de garde comprenant un compteur de chien de garde incrémenté au front d'une horloge fournie par un oscillateur interne au circuit (1), le circuit chien de garde étant configuré en mode *reset* de sorte à émettre un signal de remise à zéro du circuit (1) lorsque le compteur de chien de garde atteint une valeur prédéfinie, le compteur de chien de garde étant remis à zéro périodiquement par l'exécution d'une instruction de réinitialisation de ce compteur.

14. Circuit selon la revendication précédente, comportant un fusible matériel permettant une activation permanente du circuit chien de garde, de sorte que lorsque le fusible est grillé lors de la programmation du circuit, le circuit chien de garde s'active en permanence en mode *reset.*

15. Utilisation du circuit selon la revendication précédente, le fusible étant grillé et les instructions de réinitialisation du compteur de chien de garde étant utilisées comme marqueurs de sécurité.
